# EUROPEAN PATENT APPLICATION

(11) **EP 4 373 164 A1**
(43) Date of publication of application: **22.05.2024**
(21) Application number: 22852136.5
(22) Date of filing: 01.08.2022
(51) Int. Cl.: H04W 48/08

(54) **RELAY COMMUNICATION METHOD, COMMUNICATION APPARATUS, AND COMMUNICATION SYSTEM**

(30) Priority: 04.08.2021 CN 202110892634
(71) Applicant: Huawei Technologies Co., Ltd., Shenzhen, Guangdong 518129 (CN)
(72) Inventor: FANG, Yuzhe, Shenzhen, Guangdong 518129 (CN); PENG, Wenjie, Shenzhen, Guangdong 518129 (CN); WANG, Rui, Shenzhen, Guangdong 518129 (CN)
(74) Representative: Maiwald GmbH
(86) International application number: PCT/CN2022/109532
(87) International publication number: WO 2023/011424

(57) **Abstract**

This application provides a relay communication method, a communication apparatus, and a communication system, to effectively improve efficiency of accessing a cell of a network device by a remote terminal. The method is applied to a communication system including a first terminal, a second terminal, and a third terminal, and the first terminal is a relay device used by the second terminal to access a network device. The method includes: The first terminal receives system information from the network device, and determines, based on the received system information, that the second terminal fails to camp on a first cell of the network device. The first terminal sends first indication information to the second terminal, where the first indication information indicates to break a sidelink between the first terminal and the second terminal, or the first indication information indicates that the second terminal fails to camp on the first cell.

## Description

This application claims priority to Chinese Patent Application No. 202110892634.2, filed with the China National Intellectual Property Administration on August 4, 2021 and entitled "RELAY COMMUNICATION METHOD, COMMUNICATION APPARATUS, AND COMMUNICATION SYSTEM", which is incorporated herein by reference in its entirety.

### TECHNICAL FIELD

This application relates to the communications field, and in particular, to a relay communication method, a communication apparatus, and a communication system.

### BACKGROUND

A sidelink (sidelink) is a new link introduced to support direct communication between devices. The sidelink includes proximity-based service direct communication and proximity-based service direct discovery between terminals, and corresponds to a wireless interface (for example, PCS). For example, in a user equipment-to-network relay (user equipment-to-network relay, U2N relay) scenario, a remote terminal needs to access a cell of a network device through a relay terminal. The remote terminal and the relay terminal may communicate with each other through a sidelink, and the relay terminal and the network device may communicate with each other through an uplink and a downlink. Therefore, before establishing the sidelink to the relay terminal, the remote terminal needs to select a suitable relay terminal from a plurality of relay terminals in a coverage area of the network device to complete cell access.

When selecting the relay terminal, the remote terminal may compare a wireless signal strength measurement value of a discovery message of the sidelink with a preset threshold to evaluate whether sidelink quality of the relay terminal meets relay selection and reselection standards. How to improve relay service performance is an urgent problem to be resolved.

### SUMMARY

This application provides a relay communication method, a communication apparatus, and a communication system, to effectively improve efficiency of accessing a cell of a network device by a remote terminal.

According to a first aspect, a relay communication method is provided, and is applied to a first terminal. The first terminal is a relay device used by a second terminal to access a network device. The method includes: receiving system information from the network device; determining, based on the system information, that the second terminal fails to camp on a first cell of the network device; and sending first indication information to the second terminal, where the first indication information indicates to break a sidelink between the first terminal and the second terminal, or the first indication information indicates that the second terminal fails to camp on the first cell.

In this embodiment of this application, when the first terminal determines, based on the received system information, that the first terminal fails to camp on the first cell, the first terminal may send, to the second terminal through the sidelink established with the second terminal, a sidelink break message or forward first cell status information and first cell reservation status information in the system information. After receiving the information, the terminal device may break the sidelink, or determine, based on at least one of the received cell status information, the cell reservation status information, or an access identity of the second terminal, whether the second terminal can camp on the first cell of the network device. In this way, the second terminal can access the first cell when it is ensured that the second terminal can successfully camp on the first cell. This effectively avoids a problem that when the first terminal can camp on the first cell, the second terminal cannot access the first cell through the first terminal, and improves efficiency of accessing the network device by the second terminal.

With reference to the first aspect, in some implementations of the first aspect, when the system information indicates that the first cell is in an access-barred state, the second terminal fails to camp on the first cell of the network device.

With reference to the first aspect, in some implementations of the first aspect, the determining, based on the system information, that the second terminal fails to camp on a first cell of the network device includes: determining, based on the system information and radio resource control RRC status information of the first terminal, that the second terminal fails to camp on the first cell.

With reference to the first aspect, in some implementations of the first aspect, the system information includes the first cell access status information, and the first cell access status information includes information indicating that the first cell is in an access-barred state or information indicating that the first cell is in a non-access-barred state.

With reference to the first aspect, in some implementations of the first aspect, the system information further includes the first cell reservation status information, the first cell reservation status information indicates a reservation status of the first cell, and the reservation status includes one or more of the following:
the first cell is reserved for use by an operator, the first cell is not for other use, or the first cell is not for future use.

With reference to the first aspect, in some implementations of the first aspect, the RRC status information of the first terminal indicates an RRC status of the first terminal.

With reference to the first aspect, in some implementations of the first aspect, the method further includes: breaking the sidelink.

According to a second aspect, a relay communication method is provided, and is applied to a first terminal. The method includes: receiving system information from a network device; and determining relay status information of the first terminal based on the system information and/or radio resource control RRC status information of the first terminal, where the relay status information includes providing a relay service or skipping providing a relay service, and the relay service includes providing a relay service for a second terminal.

In this embodiment of this application, when the first terminal can camp on a first cell, the first terminal forwards first cell access status information and first cell reservation status information in the system information from the network device to the second terminal. In this way, the second terminal can determine, based on the received information, whether the second terminal can camp on the first cell, and the second terminal can access the first cell when it is ensured that the second terminal can successfully access the first cell. This effectively avoids a problem that when the first terminal can camp on the first cell, the second terminal cannot access the first cell through the first terminal, and improves efficiency of accessing the network device by the second terminal.

With reference to the second aspect, in some implementations of the second aspect, the system information includes the first cell access status information of the network device, where the first cell access status information includes information indicating that the first cell is in an access-barred state or information indicating that the first cell is in a non-access-barred state.

With reference to the second aspect, in some implementations of the second aspect, the system information further includes the first cell reservation status information, where the first cell reservation status information indicates a reservation status of the first cell, and the reservation status includes one or more of the following: the first cell is reserved for use by an operator, the first cell is not for other use, or the first cell is not for future use.

With reference to the second aspect, in some implementations of the second aspect, the method further includes: sending a first message when the relay status information of the first terminal includes providing a relay service. The first message carries the first cell access status information and the first cell reservation status information, and/or information about whether the second terminal is allowed to camp on the first cell.

With reference to the second aspect, in some implementations of the second aspect, the method further includes: skipping sending a first message when the relay status information of the first terminal includes skipping providing the relay service.

With reference to the second aspect, in some implementations of the second aspect, the method further includes: receiving a request message from the second terminal, where the request message is used to discover the first terminal that provides the relay service, and the request message carries an access identity AI of the second terminal; and determining, based on the AI of the second terminal and the system information, whether the second terminal is allowed to camp on the first cell.

According to a third aspect, a relay communication method is provided, and is applied to a second terminal, where the second terminal accesses a network device through a first terminal. The method includes: receiving first indication information from the first terminal, where the first indication information indicates to break a sidelink between the first terminal and the second terminal, or the first indication information indicates that the second terminal fails to camp on a first cell of the network device; and breaking the sidelink between the first terminal and the second terminal based on the first indication information.

With reference to the third aspect, in some implementations of the third aspect, before the receiving first indication information from the first terminal, the method further includes: establishing the sidelink.

With reference to the third aspect, in some implementations of the third aspect, after the breaking the sidelink between the first terminal and the second terminal based on the first indication information, the method further includes: selecting a third terminal or reselecting a second cell of the network device, where the third terminal is a relay device that enables the second terminal to access the network device.

According to a fourth aspect, a relay communication method is provided, and is applied to a second terminal, where the second terminal accesses a network device through a first terminal. The method includes: receiving a first message from the first terminal, where the first message carries first cell access status information and first cell reservation status information that are of the network device, and/or information about whether the second terminal is allowed to camp on a first cell; and determining, based on the first message, capability information of camping on the first cell by the second terminal, where the capability information of camping on the first cell includes camping on the first cell or failing to camp on the first cell.

With reference to the fourth aspect, in some implementations of the fourth aspect, the first cell access status information includes information indicating that the first cell is in an access-barred state or information indicating that the first cell is in a non-access-barred state.

With reference to the fourth aspect, in some implementations of the fourth aspect, the first cell reservation status information indicates a reservation status of the first cell, and the reservation status includes one or more of the following: the first cell is reserved for use by an operator, the first cell is not for other use, or the first cell is not for future use.

With reference to the fourth aspect, in some implementations of the fourth aspect, the method further includes: sending a request message to the first terminal, where the request message is used to discover the first terminal, and the request message carries an access identity AI of the second terminal.

According to a fifth aspect, a communication apparatus is provided, configured to perform the method in any possible implementation of the first aspect or the third aspect. Specifically, the communication apparatus includes a module configured to perform the method in any one of the foregoing aspects or the possible implementations of the third aspect.

In a design, the communication apparatus may include modules that are in a one-to-one correspondence with the methods/operations/steps/actions described in the first aspect or the third aspect. The module may be a hardware circuit, or may be software, or may be implemented by a hardware circuit in combination with software.

In another design, the communication apparatus is a communication chip, and the communication chip may include an input circuit or interface configured to send information or data, and an output circuit or an interface configured to receive information or data.

In another design, the communication apparatus is a communication device, and the communication device may include a transmitter configured to send information or data and a receiver configured to receive information or data.

In another design, the communication apparatus is configured to perform the method in any one of the first aspect or the possible implementations of the third aspect. The communication apparatus may be configured in a terminal, or the communication apparatus is the first terminal.

According to a sixth aspect, another communication apparatus is provided, is configured to perform the method in any possible implementation of the second aspect or the fourth aspect. Specifically, the communication apparatus includes a module configured to perform the method in any possible implementation of the second aspect or the fourth aspect.

In a design, the communication apparatuses provided in the fifth aspect and the sixth aspect may include modules that are in a one-to-one correspondence with the methods/operations/steps/actions described in the foregoing aspects. The module may be a hardware circuit, or may be software, or may be implemented by a hardware circuit in combination with software.

In another design, the communication apparatus is a communication chip, and the communication chip may include an input circuit or interface configured to send information or data, and an output circuit or an interface configured to receive information or data.

In another design, the communication is a communication device, and the communication device may include a transmitter configured to send information or data and a receiver configured to receive information or data.

In another design, the communication apparatus is configured to perform the method in any possible implementation of the second aspect or the fourth aspect. The communication apparatus may be configured in a terminal, or the communication apparatus is the second terminal.

According to a seventh aspect, a processor is provided, and includes an input circuit, an output circuit, and a processing circuit. The processing circuit is configured to receive a signal through the input circuit, and transmit a signal through the output circuit, so that the processor performs the method in any possible implementation of any one of the foregoing aspects.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

The communication apparatus in the seventh aspect may be a chip, and the processor may be implemented by using hardware, or may be implemented by using software. When the processor is implemented by using hardware, the processor may be a logic circuit, an integrated circuit, or the like. When the processor is implemented by using software, the processor may be a general-purpose processor, and may be implemented by reading software code stored in the memory. The memory may be integrated in the processor, or may be located outside the processor and exist independently.

According to an eighth aspect, a computer program product is provided. The computer program product includes a computer program (which may alternatively be referred to as code or instructions). When the computer program runs, a computer is enabled to perform the method in any possible implementation of any one of the foregoing aspects.

According to a ninth aspect, a computer-readable storage medium is provided. The computer-readable storage medium stores a computer program (which may alternatively be referred to as code or instructions). When the computer program runs on a computer, the computer is enabled to perform the method in any possible implementation of any one of the foregoing aspects.

According to a tenth aspect, a chip system is provided. The chip system includes a processor, configured to implement the method in any one of the first aspect or the possible implementations of the first aspect, or configured to implement the method in any possible implementation of any one of the foregoing aspects.

In a possible design, the chip system further includes a memory, and the memory is configured to store program instructions. The chip system may include a chip, or may include a chip and another discrete component.

### BRIEF DESCRIPTION OF DRAWINGS

FIG. 1 is a schematic diagram of a communication system according to an embodiment of this application;
FIG. 2 is a schematic flowchart of a relay communication method according to an embodiment of this application;
FIG. 3 is a schematic flowchart of another relay communication method according to an embodiment of this application;
FIG. 4 is a schematic flowchart of still another relay communication method according to an embodiment of this application;
FIG. 5 is a schematic block diagram of a communication apparatus according to an embodiment of this application; and
FIG. 6 is a schematic block diagram of another communication apparatus according to an embodiment of this application.

### DESCRIPTION OF EMBODIMENTS

The following describes technical solutions of this application with reference to accompanying drawings.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) mobile communication system, a new radio (new radio, NR) system, or another evolved communication system, and a next-generation mobile communication system of the 5G communication system.

The terminal in embodiments of this application may alternatively be referred to as user equipment (user equipment, UE), a mobile station (mobile station, MS), a mobile terminal (mobile terminal, MT), an access terminal, a subscriber unit, a subscriber station, a mobile station, a mobile station, a remote station, a remote terminal, a mobile device, a user terminal, a terminal, a wireless communication device, a user agent, a user apparatus, or the like.

The terminal may be a device that provides voice/data connectivity for a user, for example, a handheld device or a vehicle-mounted device that has a wireless connection function. Currently, examples of some terminals include: a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device that has a wireless communication function, or another processing device connected to a wireless modem, a vehicle-mounted device, a wearable device, a terminal in a 5G network, a terminal in a future evolved public land mobile network (public land mobile network, PLMN), or the like. This is not limited in this application.

As an example rather than a limitation, in this application, the terminal may be a terminal in an internet of things (internet of things, IoT) system. The internet of things is an important part in development of future information technologies. A main technical feature of the internet of things is to connect an object to a network by using a communication technology, to implement an intelligent network for human-machine interconnection and thing-thing interconnection. For example, the terminal in embodiments of this application may be a wearable device. The wearable device may alternatively be referred to as a wearable intelligent device, and is a general term of a wearable device that is intelligently designed and developed for daily wear by using a wearable technology, for example, glasses, gloves, a watch, clothing, and shoes. The wearable device is a portable device that is directly worn on a body or integrated into clothes or an accessory of a user. The wearable device is not only a hardware device, but also can implement powerful functions through software support, data exchange, and cloud interaction. In a board sense, wearable intelligent devices include full-featured and large-sized devices that can implement complete or partial functions without depending on smartphones, such as smart watches or smart glasses, and devices that focus on only one type of application function and need to work with other devices such as smartphones, such as various smart bands or smart jewelry for monitoring physical signs.

As an example rather than a limitation, in embodiments of this application, the terminal may alternatively be a terminal in machine type communication (machine type communication, MTC). In addition, the terminal may alternatively be a vehicle-mounted module, a vehicle-mounted module, a vehicle-mounted component, a vehicle-mounted chip, a vehicle-mounted unit, or the like that is equipped in a vehicle as one or more components or units. The vehicle may implement the method provided in this application through the vehicle-mounted module, the vehicle-mounted module, the vehicle-mounted component, the vehicle-mounted chip, the vehicle-mounted unit, or the like. Therefore, embodiments of this application may also be applied to the internet of vehicles, for example, a vehicle to everything (vehicle to everything, V2X) technology, a long term evolution-vehicle (long term evolution-vehicle, LTE-V) technology, or a vehicle-to-vehicle (vehicle-to-vehicle, V2V) technology.

A network device in this application may be a device communicating with a terminal. The network device may alternatively be referred to as an access network device or a wireless access network device. The network device may be a transmission and reception point (transmission reception point, TRP), or may be an evolved NodeB (evolved NodeB, eNB, or eNodeB) in an LTE system, or may be a home NodeB (for example, a home evolved NodeB, or a home NodeB, HNB), a baseband unit (baseband unit, BBU), or a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like, or may be an access point (access point, AP) in a WLAN, or may be a gNB in an NR system. Alternatively, the network device may be a city base station, a micro base station, a pico base station, a femto base station, or the like. This is not limited in this application.

In a network structure, the network device may include a central unit (central unit, CU) node, a distributed unit (distributed unit, DU) node, a radio access network (radio access network, RAN) device including a CU node and a DU node, or a RAN device including a control plane CU node (CU-CP node), a user plane CU node (CU-UP node), and a DU node.

The network device provides a service for a cell, and the terminal communicates with the cell through a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells have features of small coverage and low transmit power, and are applicable to providing a high-rate data transmission service.

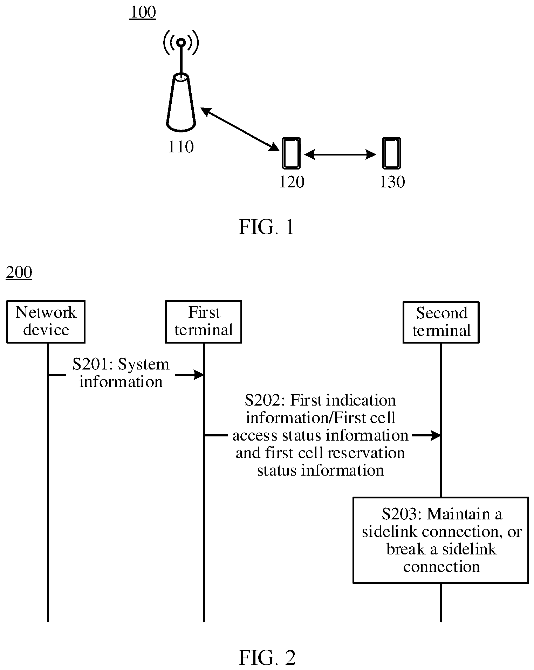

For ease of understanding embodiments of this application, a communication system applicable to embodiments of this application is first described in detail with reference to FIG. 1.

FIG. 1 is a schematic diagram of a communication system 100 according to an embodiment of this application. As shown in FIG. 1, the communication system 100 includes a network device 110, a terminal 120, and a terminal 130. The terminal 120 is located within a cell coverage range of the network device 110, and the terminal 130 may be located within the cell coverage range, or may be located outside the cell coverage range. The terminal 120 communicates with the network device 110 through an uplink and a downlink. The terminal 130 may communicate with the network device 110 through the terminal 120. In this case, there is a sidelink (sidelink) connection between the terminal 120 and the terminal 130.

It should be understood that in embodiments of this application, the terminal specifically refers to a device that can perform sidelink communication, and is classified into two types: the terminal 120 (a relay terminal) and the terminal 130 (a remote terminal). The relay terminal is a terminal that supports providing a relay service, and provides the relay service for the terminal 130. Specifically, the relay terminal may receive uplink data from the terminal 130 and relay the uplink data to a network device, and may receive downlink data from the network device and relay the downlink data to the terminal 130. The remote terminal is a terminal that supports access to the network device through the relay service.

It should be understood that FIG. 1 is merely a simplified schematic diagram for ease of understanding. The communication system 100 may further include another device that is not shown in FIG. 1.

The relay terminal is a relay device configured to provide a relay service, or may be a relay module or a relay unit. This is not limited in this application. In embodiments of this application, an example in which the relay terminal is the relay device is used for description.

In FIG. 1, before the terminal 130 (the remote terminal) establishes a sidelink communication link to the terminal 120 (the relay terminal), the remote terminal needs to search for a suitable relay terminal around the remote terminal. This process is referred to as relay discovery (relay discovery). In some embodiments, there are two relay discovery models: a model A and a model B. In the model A, the relay terminal broadcasts a discovery message of the relay terminal, and then a remote terminal that is interested in the message may read and process the discovery message, and determine whether a sidelink can be established between the relay terminal and the remote terminal. In the model B, the remote terminal sends request information that the remote terminal intends to receive a response from the relay terminal. After receiving the information, the surrounding relay terminal determines whether to respond, and further determines whether the sidelink can be established between the remote terminal and the surrounding relay terminal.

It should be understood that the sidelink is a new link introduced to support direct communication between devices, and may be applied to a device-to-device (device-to-device, D2D) application scenario and a vehicle-to-everything (vehicle-to-everything, V2X) domain. The sidelink includes proximity-based service direct communication and proximity-based service discovery between terminals, and corresponds to a PC5 interface.

It should be further understood that the link between the relay terminal and the network device corresponds to a Uu interface, and may alternatively be referred to as a Uu network.

In FIG. 1, when the terminal 120 (the relay terminal) performs uplink and downlink communication with the network device 110, the relay terminal needs to be able to access a cell corresponding to the network device. Specifically, whether the terminal can access the cell corresponding to the network device may be determined based on system information sent by the network device to the terminal. The system information (system information, SI) may include a master information block (master information block, MIB) and a plurality of system information blocks (system information blocks, SIBs). For example, the MIB may be transmitted on a broadcast channel (broadcast channel, BCH) in a periodicity of 80 milliseconds (milliseconds, ms), and repeated within 80 ms. The MIB includes a limited quantity of most important and most commonly used transmission parameters, and a parameter needed by a SIB1 is obtained from the cell. The MIB further includes indication information such as a system frame number (system frame number, SFN) and information about whether a cell is barred (cellBarred). In some embodiments, the SIB1 is transmitted on a downlink shared channel (downlink shared channel, DL-SCH) with a periodicity of 160 ms, and a transmission repetition periodicity may be changed within 160 ms. A default transmission repetition periodicity of the SIB 1 is 20 ms, but an actual transmission repetition periodicity depends on network implementation. The SIB 1 includes information about availability and scheduling of another SIB (for example, mapping of a SIB to an SI message, a periodicity, an SI window size) and indicates whether one or more SIBs are provided only on demand. The SIB1 is a cell-specific SIB.

It should be understood that the system information may include cell access status information and cell reservation status information, or other information. This is not limited in this application.

For example, in the Uu network, a terminal may first perform public land mobile network (public land mobile network, PLMN) selection, and attempt to select and camp on a suitable cell after a cell selection or reselection evaluation process. The suitable cell is a cell that is indicated by a network in the MIB and is not barred, and is not considered as "barred" by an access identity (access identity, AI) of the terminal or a cell state broadcast in the SIB1.

For example, in the MIB, signaling cellBarred indicates whether a cell is barred, and an information element type is "barred" or "not barred". When cellBarred is set to "barred", cell reselection is performed if the terminal is in an RRC_IDLE state or an RRC_INACTIVE state.

For example, in the SIB1, there is an information element parameter related to a case that the terminal considers the cell is barred or not barred. For example, cellReservedForOperatorUse (the information element type is "reserved" or "not reserved"): A plurality of PLMNs or NPNs are indicated in the SIB 1, and this field is specified based on each PLMN or a standalone non-public network (Standalone non-public network, SNPN). cellReservedForOtherUse (whose information element type is "true"): If a plurality of PLMNs are indicated in the SIB1, this field is applicable to all PLMNs. cellReservedForFutureUse (whose information element type is "true"): If a plurality of PLMNs or NPNs are indicated in the SIB1, this field is applicable to all PLMNs and NPNs.

It should be understood that for different configuration information in the SIB1, different types of terminals separately consider a cell to be in a different state. For example, when a cell state is indicated as "not barred" and "not reserved", other use is indicated as "true", and future use is indicated as "true", each UE considers the cell as a candidate cell during cell selection and cell reselection. When the cell broadcasts any closed access group identifier (closed access group identifier, CAG-ID) or network identifier (network identifier, NID), the cell state is indicated as "not barred" or "not reserved" for use by an operator, the other use is not indicated as "true", and the future use is not indicated as "true", each UE supporting an NPN considers the cell as a candidate cell during cell selection and cell reselection, and another terminal shall consider the cell state of the cell as "barred". When the cell state is indicated as "not barred" and "reserved" for use by an operator in any PLMN/SNPN, the other use is not indicated as "true", and the future use is not indicated as "true", if the field cellReservedForOperatorUse of the PLMN is set to "reserved", the UE to which an access identity being 11 or 15 is allocated and that operates in an HPLMN/EHPLMN of the UE considers the cell as a candidate cell during cell selection and reselection. If the cellReserveForOperatorUse field of a selected/registered SNPN is set to "reserved", the UE allocated to the access identity that is 11 or 15 considers the cell as a candidate cell during cell selection and reselection. The UE to which access identities being 0, 1, 2, and 12 to 14 are allocated considers the cell state as "barred".

Currently, before the remote terminal establishes the sidelink communication link to the relay terminal, a wireless measurement on the PC5 interface is considered as part of a relay terminal selection/reselection standard. In some embodiments, the relay terminal selection standard is as follows: The remote terminal compares a PC5 wireless measurement value of the relay terminal with a threshold configured or preconfigured by the gNB. The remote terminal uses a wireless signal strength measurement of a discovery message of the sidelink to evaluate whether PC5 link quality of the relay terminal meets the relay selection and reselection standard. When the remote terminal is connected to the relay terminal, the remote terminal may use an SL-RSRP measurement on a sidelink unicast link to evaluate whether the PC5 link quality of the relay terminal meets the relay reselection standard. If NR sidelink signal strength of current sidelink relay is lower than the (preconfigured) threshold, the relay reselection should be triggered. In addition, if the remote terminal detects an RLF connected to the PC5 of the current relay terminal, the relay reselection may be triggered again. At the same time, the remote terminal further needs to consider a higher-level relay selection or reselection standard. The relay selection or reselection may be triggered by an upper layer of the remote terminal.

In addition, for the relay selection or reselection, when the remote terminal has a plurality of suitable relay terminals as candidates to meet all AS layer and higher layer standards, and the remote terminal needs to select one relay terminal, selection of one relay terminal depends on implementation of the remote terminal.

In the foregoing manner of selecting the relay terminal, only wireless signal strength of the cell is considered for comparison. If the cell state changes or some special settings exist, for example, when the relay terminal is in an RRC_CONNECTED state, the cell state in the MIB is set to "barred", and in this case, another remote terminal cannot access the candidate cell through the relay terminal. If the information element cellReservedForOperatorUse of the SIB1 of the cell is set to "reserved", and an access identity allocated to the remote terminal is either 11 or 15, the relay terminal considers that the cell is not barred. If an access identity allocated to the relay terminal is one of 0, 1, 2, and 12 to 14, the remote terminal considers that the cell is barred. In other words, the relay terminal considers that the cell is not barred, and the remote terminal considers that the cell is barred, that is, cannot be camped on. If the remote terminal uses the relay terminal as a candidate, and attempts to establish a PC5 link to the relay terminal, when the relay terminal forwards the system information, the remote terminal finds that the cell cannot be camped on, and data transmission cannot be performed through the relay terminal.

In view of this, this application provides a relay communication method, a communication apparatus, and a communication system. After a sidelink is established between a remote terminal and a relay terminal, when determining, based on system information, that the remote terminal fails to camp on a cell of a network device, the relay terminal sends sidelink break information to the remote terminal. Alternatively, before the sidelink is established between the remote terminal and the relay terminal, first cell access status information and first cell reservation status information in the system information received by the relay terminal are forwarded to the remote terminal. In this way, the remote terminal determines, based on the received information, whether the remote terminal can maintain a sidelink connection to the relay terminal or whether the remote terminal can camp on a first cell of the network device through the relay terminal. In this way, the remote terminal can access the first cell when it is ensured that the remote terminal can successfully camp on the first cell. This effectively improves efficiency of accessing the first cell by the remote terminal.

The relay communication method provided in this application may be applied to the communication system shown in FIG. 1, or may be applied to another communication system. This is not limited in this embodiment of this application. The relay communication method provided in this embodiment of this application is separately described in detail below with reference to two scenarios. It should be understood that the relay terminal in FIG. 1 may alternatively be referred to as a first terminal, and the remote terminal in FIG. 1 may alternatively be referred to as a second terminal. This is not limited in this application.

With reference to FIG. 2 to FIG. 4, the following describes in detail the relay communication method provided in this embodiment of this application.

FIG. 2 is a schematic flowchart of a relay communication method according to an embodiment of this application. As shown in FIG. 2, the method 200 may include the following steps.

S201: A network device sends system information to a first terminal. Correspondingly, the first terminal receives the system information.

The system information may include first cell access status information and/or first cell reservation status information of the network device. The first cell access status information includes information indicating that a first cell is in an access-barred state or information indicating that the first cell is in a non-access-barred state. The first cell reservation status information indicates a reservation status of the first cell.

It may be understood that the first cell reservation status information may further include other information, and the reservation status of the first cell may include a first reservation status.

In this embodiment of this application, the first reservation status may be understood as indicating information related to cell reservation. For example, the first reservation status may be as follows: the first cell is reserved for use by an operator, the first cell is not for other use, or the first cell is not for future use.

For example, the reservation status may include at least one of the following: the first cell is reserved for use by an operator, the first cell is not for other use, or the first cell is not for future use.

It should be understood that the first cell may be a cell on which the first terminal camps.

It should be understood that the system information may further include access status information of another cell of the network device and/or reservation status information of another cell.

For example, the system information may include an MIB and/or a SIB 1. If a cellBarred parameter in the MIB is set to "barred", it indicates that the first cell is in the access-barred state. In other words, it indicates that no terminal device is allowed to access the first cell. If a cellBarred parameter in the MIB is set to "not barred", it indicates that a current cell is in the non-access-barred state. In other words, it indicates that any terminal device is allowed to access the first cell.

For example, if a cellReservedForOperatorUse parameter in the SIB1 is set to "reserved", it indicates that the first cell is reserved for use by an operator; if cellReservedForOtherUse is not "true", it indicates that the first cell is not for other use; and if cellReservedForFutureUse is not "true", it indicates that the first cell is not for future use.

S202: The first terminal sends first indication information, or the first cell access status information and the first cell reservation status information to a second terminal based on the received system information.

The first indication information indicates to break a sidelink between the first terminal and the second terminal, or the first indication information indicates that the second terminal fails to camp on the first cell.

It should be understood that there is the sidelink between the first terminal and the second terminal. In other words, the first terminal may send the first indication information or a second type of information to the second terminal through the sidelink.

In a possible implementation, when the first cell access status information in the system information indicates that the first cell is in the access-barred state, the second terminal fails to camp on the first cell. Optionally, when the second terminal fails to camp on the first cell, the first terminal sends, to the second terminal, a sidelink break message, or the information indicating that the first cell is in the access-barred state (in other words, the second terminal fails to camp on the first cell). Correspondingly, the second terminal receives the sidelink break message or the information indicating that the first cell is in the access-barred state.

Alternatively, when the first cell access status information in the system information indicates that the first cell is in the non-access-barred state, the first cell reservation status information in the system information indicates that the reservation status of the first cell is the first reservation status, and RRC status information of the first terminal indicates that RRC of the first terminal is in a non-connected state and that the first terminal fails to camp on the first cell when an access identity (access identity, AI) of the first terminal is in a range 1 or belongs to a set 1. Optionally, when the second terminal fails to camp on the first cell, the first terminal sends the sidelink break message to the second terminal. Correspondingly, the second terminal receives the sidelink break message.

The set 1 or the range 1 in this embodiment of this application may be a terminal including an AI that is 0, 1, 2, and 12 to 14.

Optionally, when the first terminal fails to camp on the first cell, the first terminal and the second terminal may continue to maintain a sidelink connection, and the first terminal performs cell reselection. When selecting and camping on a second cell of the network device, the first terminal re-sends cell access status information and cell reservation status information of the second cell to the second terminal, and the second terminal determines, based on the received information, whether the second terminal can camp on the second cell. It should be understood that the second cell is another cell that is different from the first cell and that can be camped on or accessed by the first terminal, may be another cell (except the first cell) of a same network device, or may be a cell of another network device. This is not limited in this application.

For example, the sidelink break message includes an identity document (identity document, ID) of the first terminal and/or identification information of a serving cell in which the first terminal is located, identification information of the second terminal, a process identifier, and information indicating that an identity of a sidelink connection is "break".

For example, the cellBarred parameter in the MIB included in the system information is set to "barred". This indicates that the first cell is in the access-barred state. In other words, the first cell access status information in the system information indicates that the first cell is in the access-barred state.

It should be understood that a case in which the RRC is in the non-connected state includes that the RRC is in an idle state or an inactive state, that is, RRC_IDLE or RRC_INACTIVE. The RRC is in a connected state, that is, RRC_CONNECTED.

It should be further understood that the first cell access status information in the system information may be carried in the MIB.

In another possible implementation, when the first cell access status information in the system information indicates that the first cell is in the access-barred state, and the RRC status information of the first terminal indicates that RRC of the first terminal is in a connected state, the first terminal keeps the connection to the first cell. Optionally, when the first terminal keeps the connection to the first cell, the first terminal may send the first cell access status information in the system information to the second terminal. Correspondingly, the second terminal receives the information.

Alternatively, when the first cell access status information in the system information indicates that the first cell is in the non-access-barred state, the first cell reservation status information in the system information indicates that the reservation status of the first cell is the first reservation status, and the RRC status information of the first terminal indicates that the RRC of the first terminal is in the connected state (or the AI of the first terminal is 11 or 15), the first terminal keeps the connection to the first cell (or the first terminal can camp on the first cell). Optionally, when the first terminal keeps the connection to the first cell, the first terminal may send the first cell access status information and the first cell reservation status information to the second terminal. Correspondingly, the second terminal receives the information.

It should be understood that the first cell reservation status information in the system information may be carried in the SIB 1.

S203: The second terminal maintains the sidelink connection or breaks the sidelink connection based on the received information.

Further, when receiving the sidelink break message or the first cell access status information (which indicates that the first cell is in the access-barred state), the second terminal breaks the sidelink to the first terminal. Optionally, when breaking the sidelink to the first terminal, the second terminal may start to compare a reference signal received power (reference signal received power, RSRP) of a surrounding cell (except the first cell) with an SL-RSRP of another terminal (except the first terminal), and select a second cell with a maximum RSRP to attempt to establish a connection or select a third terminal with a maximum SL-RSRP to attempt to reestablish a sidelink.

Further, when receiving the first cell access status information (which indicates that the first cell is in the non-access-barred state) and the first cell reservation status information, the second terminal determines, based on the received information and an AI of the second terminal, whether the second terminal can camp on the first cell.

That the second terminal determines whether the second terminal can camp on the first cell may be understood as follows: The second terminal fails to camp on the first cell of the network device, or the first terminal and the second terminal continue to maintain the sidelink connection.

For example, when the first cell access status information indicates that the first cell is in the non-access-barred state, the first cell reservation status information indicates that the reservation status of the first cell is the first reservation status, and the AI of the second terminal is in the range 1 or belongs to the set 1, the second terminal fails to camp on the first cell of the network device.

For example, when the first cell access status information indicates that the first cell is in the non-access-barred state, the first cell reservation status information indicates that the reservation status of the first cell is the first reservation status, and the AI of the second terminal is 11 or 15, the second terminal may camp on the first cell of the network device, and may maintain the sidelink connection.

For example, when parameters in the first cell access status information and the first cell reservation status information that are received by the second terminal are set as follows: The cellBarred parameter is set to "not barred", the cellReservedForOperatorUse parameter is set to "reserved", cellReservedForOtherUse is not set to "true", cellReservedForFutureUse is not set to "true", and the AI of the second terminal is in the range 1 or the set 1, the second terminal fails to camp on the first cell, and therefore breaks the sidelink and performs cell reselection or relay reselection.

For example, when parameters in the first cell access status information and the first cell reservation status information that are received by the second terminal are set as follows: The cellBarred parameter is set to "not barred", the cellReservedForOperatorUse parameter is set to "reserved", cellReservedForOtherUse is not set to "true", cellReservedForFutureUse is not set to "true", and the AI of the second terminal is 11 or 15, the second terminal can camp on the first cell.

In this embodiment of this application, when the first terminal determines, based on the received system information, that the first terminal fails to camp on the first cell, the first terminal may send, to the second terminal through the sidelink established with the second terminal, the sidelink break message or forward the first cell status information and first cell reservation status information in the system information. After receiving the information, the terminal device may break the sidelink, or determine, based on at least one of the received cell state information, the cell reservation status information, or the access identity of the second terminal, whether the second terminal can camp on the first cell of the network device. In this way, the second terminal can access the first cell when it is ensured that the second terminal can successfully camp on the first cell. This effectively avoids a problem that when the first terminal can camp on the first cell, the second terminal cannot access the first cell through the first terminal, and improves efficiency of accessing the network device by the second terminal.

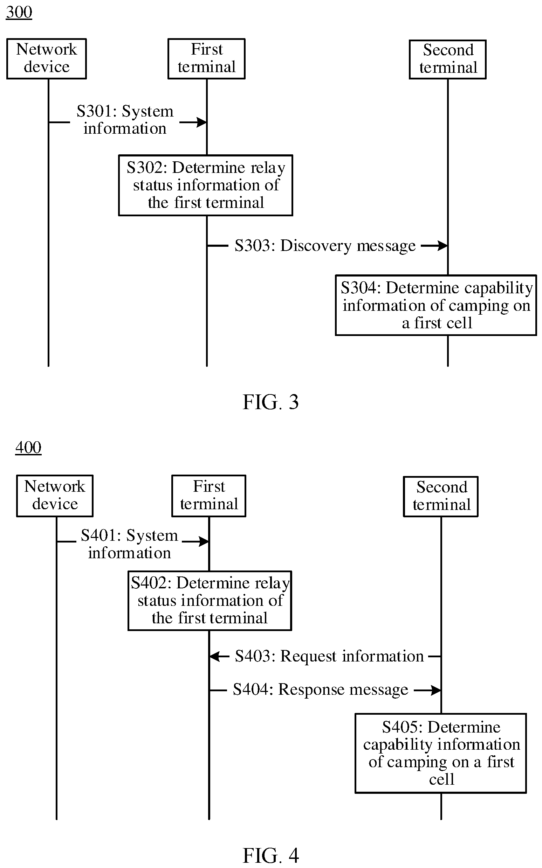

FIG. 3 is a schematic flowchart of another relay communication method according to an embodiment of this application. As shown in FIG. 3, the method 300 may include the following steps.

For S301, refer to related descriptions in S201 in the foregoing method 200. Details are not described herein again.

S302: A first terminal determines, based on received system information and/or received RRC status information of the first terminal, relay status information of the first terminal.

The relay status information includes providing a relay service or skipping providing a relay service. The relay service includes providing a relay service for a second terminal.

Optionally, when the first terminal may provide the relay service for the second terminal, the first terminal sends a first message. The first message may alternatively be referred to as a discovery message or a response message.

Optionally, when the first terminal cannot provide the relay service for the second terminal, the first terminal does not send the first message.

In this embodiment of this application, the first message that is sent by the first terminal to the second terminal after the first terminal receives a request message from the second terminal is referred to as the response message. The first message actively sent by the first terminal based on the relay service status information of the first terminal is referred to as the discovery message.

S302 may be an optional step. In other words, after S301 is performed, S303 may continue to be performed. In other words, after receiving the system information, the first terminal sends the discovery message or does not send the discovery message to the second terminal. It should be understood that whether the first terminal sends the message may be determined by the first terminal based on status information of the first terminal or other information, or may be determined based on S302 shown in this application. This is not limited in this application.

In a possible implementation, S303 is performed: Send the discovery message to the second terminal. When first cell access status information in the system information indicates that a first cell is in an access-barred state, and the RRC status information of the first terminal indicates that RRC of the first terminal is in a connected state, the first terminal keeps a connection to the first cell (in other words, the first terminal may provide the relay service for the second terminal). Optionally, when the first terminal may provide the relay service for the second terminal, the first terminal may send the discovery message, and include the first cell access status information in the discovery message. Correspondingly, the second terminal receives the discovery message.

Alternatively, when first cell access status information in the system information indicates that a first cell is in a non-access-barred state, first cell reservation status information in the system information indicates that a reservation status of the first cell is a first reservation status, and the RRC status information of the first terminal indicates that RRC of the first terminal is in a connected state (or an AI of the first terminal is 11 or 15), the first terminal may camp on the first cell (in other words, the first terminal may provide the relay service for the second terminal). Optionally, when the first terminal may provide the relay service for the second terminal, the first terminal may send the discovery message, and include the first cell access status information and the first cell reservation status information in the discovery message. Correspondingly, the second terminal receives the discovery message.

It should be understood that the discovery message may be sent in a broadcast, unicast, or multicast manner. This is not limited in this application.

In another possible implementation, when first cell access status information in the system information indicates that a first cell is in an access-barred state, and the RRC status information of the first terminal indicates that RRC of the first terminal is in a non-connected state, it is determined that the first terminal fails to camp on the first cell (in other words, the first terminal cannot provide the relay service for the second terminal). Optionally, when the first terminal cannot provide the relay service for the second terminal, the first terminal may perform cell reselection, and not send the discovery message.

Alternatively, when first cell access status information in the system information indicates that a first cell is in non-access-barred state, first cell reservation status information in the system information indicates that a reservation status of the first cell is a first reservation status, the RRC status information of the first terminal indicates that RRC of the first terminal is in a non-connected state, and an AI of the first terminal is in a range 1 or a set 1, it is determined that the first terminal fails to camp on the first cell (in other words, the first terminal cannot provide the relay service for the second terminal). Optionally, when the first terminal cannot provide the relay service for the second terminal, the first terminal may perform cell reselection, and not send the discovery message.

For example, that the RRC is in the non-connected state includes that the RRC is in an idle state or an inactive state, and a corresponding RRC state is RRC_IDLE or RRC_INACTIVE. When the RRC is in the connected state, a corresponding RRC state is RRC _CONNECTED.

It should be understood that the first cell access status information in the system information may be carried in an MIB. The first cell reservation status information in the system information may be carried in a SIB 1.

It should be further understood that a cell reselection process may be that the first terminal reselects a cell other than the first cell of a network device corresponding to the first cell, or reselects a cell of another network device. This is not limited in this application.

S304: The second terminal determines, based on information carried in the received first message, capability information of camping on the first cell.

In this embodiment of this application, the capability information of camping on the first cell includes camping on the first cell, or failing to camp on the first cell.

Further, when the first cell access status information carried in the discovery message indicates that the first cell is in the access-barred state, the second terminal fails to camp on the first cell of the network device.

Further, when the first cell access status information carried in the discovery message indicates that the first cell is in the non-access-barred state, the first cell reservation status information indicates that the reservation status of the first cell is the first reservation status, and an AI of the second terminal is in the range 1 or the set 1, the second terminal fails to camp on the first cell of the network device.

Further, when the first cell access status information carried in the discovery message indicates that the first cell is in the non-access-barred state, the first cell reservation status information indicates that the reservation status of the first cell is the first reservation status, and the AI of the second terminal is 11 or 15, the second terminal may camp on the first cell of the network device.

It should be understood that if the first cell access status information carried in the discovery message received by the second terminal indicates that the first cell is in the access-barred state, or the discovery message from the first terminal is not received, the first cell and the first terminal are not used as a candidate cell and terminal for accessing the network device. Optionally, the second terminal may reselect a cell or another terminal that can provide the relay service.

It should be further understood that when the second terminal can camp on the first cell, a sidelink may be established between the second terminal and the first terminal, to access the first cell.

In this embodiment of this application, when the first terminal can camp on the first cell, the first terminal forwards the first cell access status information and the first cell reservation status information in the system information from the network device to the second terminal. In this way, the second terminal can determine, based on the received information, whether the second terminal can camp on the first cell, and the second terminal can access the first cell when it is ensured that the second terminal can successfully access the first cell. This effectively avoids a problem that when the first terminal can camp on the first cell, the second terminal cannot access the first cell through the first terminal, and improves efficiency of accessing the network device by the second terminal.

FIG. 4 is a schematic flowchart of still another relay communication method according to an embodiment of this application. As shown in FIG. 4, the method 400 may include the following steps.

For S401 and S402, refer to related descriptions in S301 and S301 in the foregoing method 300. Details are not described herein again.

For a process of determining relay status information of a first terminal in S402, refer to related descriptions in the method 300. Details are not described herein again.

S402 may be an optional step. In other words, after S401 is performed, S403 and S404 may continue to be performed. It should be understood that whether the first terminal sends a response message may be determined by the first terminal based on status information of the first terminal or other information, or may be determined based on S402 shown in this application. This is not limited in this application.

S403: A second terminal sends a request message. Correspondingly, the first terminal receives the request message.

It should be understood that the request message may be sent in a broadcast, unicast, or multicast manner. This is not limited in this application.

In this embodiment of this application, the request message sent by the second terminal may carry an AI of the second terminal.

S404: The first terminal sends the response message or does not send the response message based on system information. Alternatively, when the first terminal can provide a relay service for the second terminal, the first terminal sends the response message based on the received system information and request message. Correspondingly, the second terminal receives the response message.

It should be understood that the response message includes the identity of the second terminal or other information, so that when receiving the response message, the second terminal may determine that the response message is the response message returned by the first terminal based on the request message.

In a possible implementation, when the first terminal may provide the relay service for the second terminal, the first terminal sends the response message, and includes first cell access status information and first cell reservation status information in the response message.

Alternatively, when the request message sent by the second terminal carries the AI of the second terminal, and the first terminal can provide the relay service for the second terminal, the first terminal determines, based on the received system information and the AI of the second terminal, whether the second terminal can camp on a first cell of a network device, sends the response message to the second terminal, and includes information about whether the second terminal can camp on the first cell in the response message. Correspondingly, the second terminal receives the response message.

That the first terminal determines whether the second terminal can camp on the first cell of the network device may be understood as follows: The second terminal can camp on the first cell of the network device, or the second terminal fails to camp on the first cell of the network device.

Further, when the first cell access status information carried in the system information indicates that the first cell is in a non-access-barred state, the first cell reservation status information indicates that a reservation status of the first cell is a first reservation status, and the AI of the second terminal is in a range 1 or a set 1, the second terminal fails to camp on the first cell of the network device, and the response message carries information that the second terminal fails to camp on the first cell.

Further, when the first cell access status information carried in the system information indicates that the first cell is in the non-access-barred state, the first cell reservation status information indicates that the reservation status of the first cell is the first reservation status, and the AI of the second terminal is 11 or 15, the second terminal may camp on the first cell of the network device, and the response message carries information that the second terminal can camp on the first cell.

In another possible implementation, if the first terminal cannot provide the relay service for the second terminal, the first terminal does not send the response message.

S405: The second terminal determines, based on the information carried in the received response message, capability information of camping on the first cell.

In this embodiment of this application, the capability information of camping on the first cell includes camping on the first cell, or failing to camp on the first cell.

When the response message carries the first cell access status information and the first cell reservation status information, for a process of determining the capability information of camping on the first cell by the second terminal, refer to related descriptions of determining the capability information of camping on the first cell by the first terminal in the foregoing method 300. Details are not described herein again.

It should be understood that if the first cell access status information carried in the response message received by the second terminal indicates that the first cell is in the access-barred state, or the response message from the first terminal is not received, the first cell and the first terminal are not used as a candidate cell and terminal for accessing the network device. Optionally, the second terminal may reselect a cell or another terminal that can provide the relay service.

In this embodiment of this application, the second terminal sends the request message including the AI of the second terminal to the first terminal. The first terminal determines, based on the AI of the second terminal in the received request message and the system information from the network device, whether the second terminal can camp on the first cell, and sends the response message including a determining result to the second terminal. In this way, the second terminal can determine, based on the received determining result, whether to camp on the first cell through the first terminal. This effectively avoids a problem that when the first terminal can camp on the first cell, the second terminal cannot access the first cell through the first terminal, and improves efficiency of accessing the network device by the second terminal.

It should be understood that sequence numbers of the processes in the method 400 do not indicate execution sequences. The execution sequences of the processes should be determined based on functions and internal logic of the processes, and should not be construed as any limitation on the implementation processes of this embodiment of this application. For example, S403 may be performed before S401, or may be performed after S401 and before S403. This is not limited in this application.

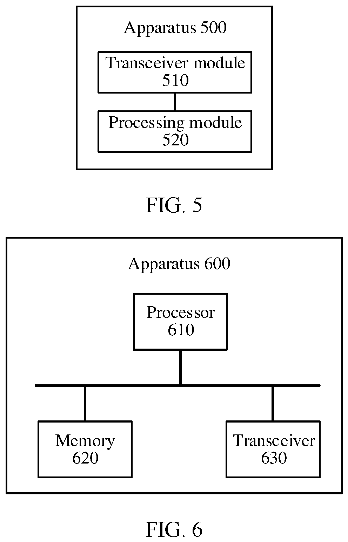

The foregoing describes in detail the relay communication methods in embodiments of this application with reference to FIG. 2 to FIG. 4. The following describes in detail communication apparatuses in embodiments of this application with reference to FIG. 5 and FIG. 6.

FIG. 5 shows a communication apparatus 500 according to an embodiment of this application. As shown in FIG. 5, the communication apparatus 500 includes a transceiver module 510 and a processing module 520.

In a possible implementation, the communication apparatus 500 is a first terminal or a chip in the first terminal.

In a design, the transceiver module 510 is configured to receive system information from a network device. The processing module 520 is configured to determine, based on the system information, that a second terminal fails to camp on a first cell of the network device. The transceiver module 510 is further configured to send first indication information to the second terminal. The first indication information indicates to break a sidelink between the first terminal and the second terminal, or the first indication information indicates that the second terminal fails to camp on the first cell.

Optionally, when the system information indicates that the first cell is in an access-barred state, the second terminal fails to camp on the first cell of the network device.

Optionally, the processing module 520 is further configured to determine, based on the system information and radio resource control RRC status information of the first terminal, that the second terminal fails to camp on the first cell.

Optionally, the system information includes first cell access status information. The first cell access status information includes information indicating that the first cell is in an access-barred state or information indicating that the first cell is in a non-access-barred state.

Optionally, the system information further includes first cell reservation status information. The first cell reservation status information indicates a reservation status of the first cell, and the reservation status includes one or more of the following: the first cell is reserved for use by an operator, the first cell is not for other use, or the first cell is not for future use.

Optionally, the RRC status information of the first terminal indicates an RRC status of the first terminal.

Optionally, the processing module 520 is further configured to break the sidelink.

In another design, the transceiver module 510 is configured to receive system information from a network device. The processing module 520 is configured to determine relay status information of the first terminal based on the system information and/or radio resource control RRC status information of the first terminal. The relay status information includes providing a relay service or skipping providing a relay service, and the relay service includes providing a relay service for a second terminal.

Optionally, the system information includes first cell access status information of the network device. The first cell access status information includes information indicating that the first cell is in an access-barred state or information indicating that the first cell is in a non-access-barred state.

Optionally, the system information further includes first cell reservation status information. The first cell reservation status information indicates a reservation status of the first cell, and the reservation status includes one or more of the following: the first cell is reserved for use by an operator, the first cell is not for other use, or the first cell is not for future use.

Optionally, the transceiver module 510 is further configured to send a first message when the relay status information of the first terminal includes providing the relay service. The first message carries the first cell access status information and the first cell reservation status information, and/or information about whether the second terminal is allowed to camp on the first cell.

Optionally, the transceiver module 510 is further configured to skip sending the first message when the relay status information of the first terminal includes skipping providing the relay service.

Optionally, the transceiver module 510 is further configured to receive a request message from the second terminal. The request message is used to discover the first terminal that provides the relay service, and the request message carries an access identity AI of the second terminal. The processing module 520 is further configured to determine, based on the AI of the second terminal and the system information, whether the second terminal is allowed to camp on the first cell.

In an optional example, a person skilled in the art may understand that the communication apparatus 500 may be specifically the first terminal in the foregoing embodiments. The communication apparatus 500 may be configured to perform the procedures and/or steps corresponding to the first terminal in the method 200, the method 300, or the method 400. To avoid repetition, details are not described herein again.

In another possible implementation, the communication apparatus 500 is a second terminal or a chip in the second terminal.

In a design, the transceiver module 510 is configured to receive first indication information from a first terminal. The first indication information indicates to break a sidelink between the first terminal and a second terminal, or the first indication information indicates that the second terminal fails to camp on a first cell of a network device. The processing module 520 is configured to break the sidelink between the first terminal and the second terminal based on the first indication information.

Optionally, the processing module 520 is further configured to establish the sidelink.

Optionally, the processing module 520 is further configured to select a third terminal or reselect a second cell of the network device. The third terminal is a relay device that enables the second terminal to access the network device.

In another design, the transceiver module 510 is configured to receive a first message from the first terminal. The first message carries first cell access status information and first cell reservation status information of the network device, and/or information about whether the second terminal is allowed to camp on the first cell. The processing module 520 is configured to determine, based on the first message, capability information of camping on the first cell by the second terminal. The capability information of camping on the first cell includes camping on the first cell or failing to camp on the first cell.

Optionally, the first cell access status information includes information indicating that the first cell is in an access-barred state or information indicating that the first cell is in a non-access-barred state.

Optionally, the first cell reservation status information indicates a reservation status of the first cell. The reservation status includes one or more of the following: the first cell is reserved for use by an operator, the first cell is not for other use, or the first cell is not for future use.

Optionally, the transceiver module 510 is further configured to send a request message to the first terminal. The request message is used to discover the first terminal that provides the relay service, and the request message carries an access identity AI of the second terminal.

In an optional example, a person skilled in the art may understand that the communication apparatus 500 may be specifically the second terminal in the foregoing embodiments. The communication apparatus 500 may be configured to perform the procedures and/or steps corresponding to the second terminal in the method 200, the method 300, or the method 400. To avoid repetition, details are not described herein again.

It should be understood that the communication apparatus 500 herein is present in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another appropriate component that supports the described function. The communication apparatus 500 may be configured to perform procedures and/or steps corresponding to the first terminal in the foregoing method embodiments, or the communication apparatus 500 may be configured to perform procedures and/or steps corresponding to the second terminal in the foregoing method embodiments. To avoid repetition, details are not described herein again.

The communication apparatus 500 has a function of implementing corresponding steps performed by the first terminal or the second terminal in the method 200, the method 300, or the method 400. The foregoing functions may be implemented by hardware, or may be implemented by hardware executing corresponding software. The hardware or the software includes one or more modules corresponding to the function.

In embodiments of this application, the communication apparatus 500 in FIG. 5 may alternatively be a chip or a chip system, for example, a system-on-a-chip (system-on-a-chip, SoC). This is not limited in this application.

FIG. 6 shows another communication apparatus 600 according to an embodiment of this application. The communication apparatus 600 includes a processor 610, a memory 620, and a transceiver 630. The processor 610, the memory 620, and the transceiver 630 are connected through an internal connection path. The memory 620 is configured to store instructions. The processor 610 is configured to execute the instructions stored in the memory 620, so that the communication apparatus 600 can perform the relay communication method 200, the method 300, or the method 400 provided in the foregoing method embodiments.

It should be understood that functions of the communication apparatus 500 in the foregoing embodiments may be integrated into the communication apparatus 600. The communication apparatus 600 may be configured to perform steps and/or procedures corresponding to the terminal device in the foregoing method embodiments, or the communication apparatus 600 may be further configured to perform steps and/or procedures corresponding to the network device in the foregoing method embodiments. Optionally, the memory 620 may include a read-only memory and a random access memory, and provide instructions and data for the processor. A part of the memory may further include a non-volatile random access memory. For example, the memory may further store information of a device type. The processor 610 may be configured to execute instructions stored in the memory. When the processor executes the instructions, the processor 610 may perform the steps and/or procedures corresponding to the terminal device in the foregoing method embodiments, or the processor 610 may perform the steps and/or procedures corresponding to the network device in the foregoing method embodiments.

It should be understood that in embodiments of this application, the processor 610 may be a central processing unit (central processing unit, CPU), or the processor 610 may be another general-purpose processor, a digital signal processor (digital signal process, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The processor 610 may be a microprocessor, or the processor 610 may be any conventional processor, or the like.

In an implementation process, steps in the method 200, the method 300, or the method 400 may be completed through an integrated logic circuit of hardware in the processor, or through instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor executes instructions in the memory and completes the steps in the foregoing methods in combination with hardware of the processor. To avoid repetition, details are not described herein again.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A relay communication method, applied to a first terminal, wherein the first terminal is a relay device used by a second terminal to access a network device, and the method comprises:
receiving system information from the network device;
determining, based on the system information, that the second terminal fails to camp on a first cell of the network device; and
sending first indication information to the second terminal, wherein the first indication information indicates to break a sidelink between the first terminal and the second terminal, or the first indication information indicates that the second terminal fails to camp on the first cell.

2. The method according to claim 1, wherein when the system information indicates that the first cell is in an access-barred state, the second terminal fails to camp on the first cell of the network device.

3. The method according to claim 1, wherein the determining, based on the system information, that the second terminal fails to camp on a first cell of the network device comprises:
determining, based on the system information and radio resource control RRC status information of the first terminal, that the second terminal fails to camp on the first cell.

4. The method according to any one of claims 1 to 3, wherein the system information comprises first cell access status information, and the first cell access status information comprises information indicating that the first cell is in an access-barred state or information indicating that the first cell is in a non-access-barred state.

5. The method according to any one of claims 1 to 4, wherein the system information further comprises first cell reservation status information, the first cell reservation status information indicates a reservation status of the first cell, and the reservation status comprises one or more of the following:
the first cell is reserved for use by an operator, the first cell is not for other use, or the first cell is not for future use.

6. The method according to any one of claims 1 to 5, wherein the RRC status information of the first terminal indicates an RRC status of the first terminal.

7. The method according to any one of claims 1 to 6, wherein the method further comprises:
breaking the sidelink.

8. A relay communication method, applied to a first terminal, wherein the method comprises:
receiving system information from a network device; and
determining relay status information of the first terminal based on the system information and/or radio resource control RRC status information of the first terminal, wherein the relay status information comprises providing a relay service or skipping providing a relay service, and the relay service comprises providing a relay service for a second terminal.

9. The method according to claim 8, wherein the system information comprises first cell access status information of the network device, and the first cell access status information comprises information indicating that the first cell is in an access-barred state or information indicating that the first cell is in a non-access-barred state.

10. The method according to claim 9, wherein the system information further comprises first cell reservation status information, the first cell reservation status information indicates a reservation status of the first cell, and the reservation status comprises one or more of the following:
the first cell is reserved for use by an operator, the first cell is not for other use, or the first cell is not for future use.

11. The method according to any one of claims 8 to 10, wherein the method further comprises:
skipping sending a first message when the relay status information of the first terminal comprises skipping providing the relay service.

12. The method according to claim 9 or 10, wherein the method further comprises:
sending a first message when the relay status information of the first terminal comprises providing the relay service, wherein the first message carries the first cell access status information and the first cell reservation status information, and/or information about whether the second terminal is allowed to camp on the first cell.

13. The method according to claim 12, wherein the method further comprises:
receiving a request message from the second terminal, wherein the request message is used to discover the first terminal that provides the relay service, and the request message carries an access identity AI of the second terminal; and
determining, based on the AI of the second terminal and the system information, whether the second terminal is allowed to camp on the first cell.

14. A relay communication method, applied to a second terminal, wherein the second terminal accesses a network device through a first terminal, and the method comprises:
receiving first indication information from the first terminal, wherein the first indication information indicates to break a sidelink between the first terminal and the second terminal, or the first indication information indicates that the second terminal fails to camp on a first cell of the network device; and
breaking the sidelink between the first terminal and the second terminal based on the first indication information.

15. The method according to claim 14, wherein before the receiving first indication information from the first terminal, the method further comprises:
establishing the sidelink.

16. The method according to claim 14 or 15, wherein after the breaking the sidelink between the first terminal and the second terminal based on the first indication information, the method further comprises:
selecting a third terminal or reselecting a second cell of the network device, wherein the third terminal is a relay device that enables the second terminal to access the network device.

17. A relay communication method, applied to a second terminal, wherein the second terminal accesses a network device through a first terminal, and the method comprises:
receiving a first message from the first terminal, wherein the first message carries first cell access status information and/or first cell reservation status information that are/is of the network device, and/or information about whether the second terminal is allowed to camp on a first cell; and
determining, based on the first message, capability information of camping on the first cell by the second terminal, wherein the capability information of camping on the first cell comprises camping on the first cell or failing to camp on the first cell.

18. The method according to claim 17, wherein the first cell access status information comprises information indicating that the first cell is in an access-barred state or information indicating that the first cell is in a non-access-barred state.

19. The method according to claim 17, wherein the first cell reservation status information indicates a reservation status of the first cell, and the reservation status comprises one or more of the following:
the first cell is reserved for use by an operator, the first cell is not for other use, or the first cell is not for future use.

20. The method according to claim 17 or 18, wherein the first cell reservation status information is carried in a system information block SIB1.

21. The method according to any one of claims 17 to 20, wherein the method further comprises:
sending a request message to the first terminal, wherein the request message is used to discover the first terminal that provides a relay service, and the request message carries an access identity AI of the second terminal.

22. A relay communication apparatus, comprising:
a transceiver module, configured to receive system information from a network device; and
a processing module, configured to determine, based on the system information, that a second terminal fails to camp on a first cell of the network device, wherein
the transceiver module is further configured to send first indication information to the second terminal, wherein the first indication information indicates to break a sidelink between the apparatus and the second terminal, or the first indication information indicates that the second terminal fails to camp on the first cell.

23. The apparatus according to claim 22, wherein when the system information indicates that the first cell is in an access-barred state, the second terminal fails to camp on the first cell of the network device.

24. The apparatus according to claim 22, wherein the processing module is further configured to:
determine, based on the system information and radio resource control RRC status information of the apparatus, that the second terminal fails to camp on the first cell.

25. The apparatus according to any one of claims 22 to 24, wherein the system information comprises first cell access status information, and the first cell access status information comprises information indicating that the first cell is in an access-barred state or information indicating that the first cell is in a non-access-barred state.

26. The apparatus method according to any one of claims 22 to 25, wherein the system information further comprises first cell reservation status information, the first cell reservation status information indicates a reservation status of the first cell, and the reservation status comprises one or more of the following:
the first cell is reserved for use by an operator, the first cell is not for other use, or the first cell is not for future use.

27. The apparatus according to any one of claims 22 to 26, wherein the RRC status information of the apparatus indicates an RRC status of the apparatus.

28. The apparatus according to any one of claims 22 to 27, wherein the processing module is further configured to:
break the sidelink.

29. A relay communication apparatus, comprising:
a transceiver module, configured to receive system information from a network device; and
a processing module, configured to determine relay status information of the apparatus based on the system information and/or radio resource control RRC status information of the apparatus, wherein the relay status information comprises providing a relay service or skipping providing a relay service, and the relay service comprises providing a relay service for a second terminal.

30. The apparatus according to claim 29, wherein the system information comprises first cell access status information of the network device, and the first cell access status information comprises information indicating that the first cell is in an access-barred state or information indicating that the first cell is in a non-access-barred state.

31. The apparatus according to claim 30, wherein the system information further comprises first cell reservation status information, the first cell reservation status information indicates a reservation status of the first cell, and the reservation status comprises one or more of the following:
the first cell is reserved for use by an operator, the first cell is not for other use, or the first cell is not for future use.

32. The apparatus according to any one of claims 29 to 31, wherein the transceiver module is further configured to:
skip sending a first message when the relay status information of the apparatus comprises skipping providing the relay service.

33. The apparatus according to claim 30 or 31, wherein the transceiver module is further configured to:
send a first message when the relay status information of the apparatus comprises providing the relay service, wherein the first message carries the first cell access status information and first cell reservation status information that are of the network device, and/or information about whether the second terminal is allowed to camp on the first cell.

34. The apparatus according to claim 33, wherein the transceiver module is further configured to:
receive a request message from the second terminal, wherein the request message is used to discover the apparatus that provides the relay service, and the request message carries an access identity AI of the second terminal; and
determine, based on the AI of the second terminal and the system information, whether the second terminal is allowed to camp on the first cell.

35. A relay communication apparatus, comprising:
a transceiver module, configured to receive first indication information from a first terminal, wherein the first indication information indicates to break a sidelink between the first terminal and the apparatus, or the first indication information indicates that the apparatus fails to camp on a first cell of a network device; and
a processing module, configured to break the sidelink between the first terminal and the apparatus based on the first indication information.

36. The apparatus according to claim 35, wherein the processing module is further configured to:
establish the sidelink.

37. The apparatus according to claim 35 or 36, wherein the processing module is further configured to:
select a third terminal or reselect a second cell of the network device, wherein the third terminal is a relay device that enables the apparatus to access the network device.

38. A relay communication apparatus, comprising:
a transceiver module, configured to receive a first message from a first terminal, wherein the first message carries first cell access status information and/or first cell reservation status information that are/is of a network device, and/or information about whether the apparatus is allowed to camp on the first cell; and
a processing module, configured to determine, based on the first message, capability information of camping on the first cell by the apparatus, wherein the capability information of camping on the first cell comprises camping on the first cell or failing to camp on the first cell.

39. The apparatus according to claim 38, wherein the first cell access status information comprises information indicating that the first cell is in an access-barred state or information indicating that the first cell is in a non-access-barred state.

40. The apparatus according to claim 38, wherein the first cell reservation status information indicates a reservation status of the first cell, and the reservation status comprises one or more of the following:
the first cell is reserved for use by an operator, the first cell is not for other use, or the first cell is not for future use.

41. The apparatus according to claim 38 or 39, wherein the first cell reservation status information is carried in a system information block SIB1.

42. The apparatus according to any one of claims 38 to 41, wherein the transceiver module is further configured to:
send a request message to the first terminal, wherein the request message is used to discover the first terminal that provides a relay service, and the request message carries an access identity AI of the apparatus.

43. A communication apparatus, comprising a processor, wherein the processor is coupled to a memory, the memory is configured to store a computer program, and when the processor invokes the computer program, the communication apparatus is enabled to perform the method according to any one of claims 1 to 7, or the method according to any one of claims 8 to 13, or the method according to any one of claims 14 to 16, or the method according to any one of claims 17 to 21.

44. A communication system, comprising: the apparatus configured to perform any one of claims 22 to 28 and the apparatus configured to perform any one of claims 35 to 37; or the apparatus configured to perform any one of claims 29 to 34 and the apparatus configured to perform any one of claims 38 to 42.

45. A computer program product, wherein the computer program product comprises computer program code, and when the computer program code is run on a computer, the computer is enabled to implement the method according to any one of claims 1 to 7, or the computer is enabled to implement the method according to any one of claims 8 to 13, or the computer is enabled to implement the method according to any one of claims 14 to 16, or the computer is enabled to implement the method according to any one of claims 17 to 21.

46. A computer-readable storage medium, configured to store instructions, wherein when the instructions are executed, a computer is enabled to perform the method according to any one of claims 1 to 7, or the computer is enabled to perform the method according to any one of claims 8 to 13, or the computer is enabled to perform the method according to any one of claims 14 to 16, or the computer is enabled to perform the method according to any one of claims 17 to 21.
